# EUROPEAN PATENT SPECIFICATION

(11) **EP 3 026 804 B1**
(45) Date of publication and mention of the grant of the patent: **10.01.2018**
(21) Application number: 14771493.5
(22) Date of filing: 24.02.2014
(51) Int. Cl.: H02M 1/36, H02J 3/38, H02M 3/335

(54) **Startup Circuit of an Auxiliary power supply of a photovoltaic inverter**
ANLAUFSCHALTUNG EINER PHOTOVOLTAIKWECHSELRICHTER-HILFSSTROMVERSORGUNG
CIRCUIT DE DÉMARRAGE POUR ALIMENTATION ÉLECTRIQUE AUXILIAIRE D'UN ONDULEUR PHOTOVOLTAÏQUE

(30) Priority: 09.08.2013 CN 201310347036
(43) Date of publication of application: 01.06.2016
(73) Proprietor: Huawei Technologies Co., Ltd., Longgang District Shenzhen, Guangdong 518129 (CN)
(72) Inventor: SHI, Yong, Shenzhen Guangdong 518129 (CN); ZHANG, Yanzhong, Shenzhen Guangdong 518129 (CN); YAN, Shuaihua, Shenzhen Guangdong 518129 (CN)
(74) Representative: Kreuz, Georg Maria
(86) International application number: PCT/CN2014/072444
(87) International publication number: WO 2015/018199

(56) References cited:
- CN-A- 101 807 850
- CN-A- 102 355 124
- CN-A- 102 570 787
- CN-A- 102 570 787
- CN-A- 102 611 293
- CN-U- 202 872 632
- JP-A- 2007 174 798
- JP-A- 2009 247 184
- US-A1- 2012 235 486

## Description

### TECHNICAL FIELD

The present invention relates to the field of photovoltaic inverters, and in particular, to a startup circuit for an auxiliary power supply of a photovoltaic inverter.

### BACKGROUND

For an auxiliary power supply of a grid-tied photovoltaic inverter, three power feeding manners are commonly used: power feeding from a power grid, power feeding from both the power grid and a direct current bus bar of a photovoltaic inverter, and power feeding from the direct current bus bar of the photovoltaic inverter. When power feeding is performed by using the former two power feeding manners, the auxiliary power supply needs to complete an AC/DC conversion, needs a rectifier bridge and a relatively large input capacitance, and also has standby energy consumption at night. However, when power is fed from the direct current bus bar of the photovoltaic inverter and sunlight is weak due to bad weather, according to an output characteristic of a solar panel, a relatively high open circuit voltage is still imposed on the direct current bus bar of the photovoltaic inverter, resulting in a phenomenon of a "false high" open circuit voltage. When a voltage of the direct current bus bar of the photovoltaic inverter reaches a startup voltage of the auxiliary power supply, the auxiliary power supply is started up. After being started up, the auxiliary power supply absorbs a current from the direct current bus bar of the photovoltaic inverter. However, in this case, a current output by the solar panel is limited. With an increase in the current absorbed by the auxiliary power supply, the voltage of the direct current bus bar of the photovoltaic inverter decreases sharply. As a result, the voltage of the direct current bus bar of the photovoltaic inverter cannot meet requirements of the auxiliary power supply, and therefore the auxiliary power supply is forcibly turned off; after the auxiliary power supply is turned off, the voltage of the solar panel increases to a relatively high value again, and the auxiliary power supply is started up again. If this keeps repeating, the auxiliary power supply and the grid-tied photovoltaic inverter may suffer from great harm.

In the prior art, for the phenomenon of the "false high" open circuit voltage of the direct current bus bar, an unloading circuit is placed between a capacitor of the direct current bus bar and the auxiliary power supply. Before the auxiliary power supply is started up, the unloading circuit is turned on, which forms a loop with the solar panel, thereby preventing the phenomenon of the "false high" open circuit voltage. However, in the prior art, the unloading circuit is totally controlled by the auxiliary power supply, that is, the unloading circuit is turned off only after the auxiliary power supply is started up, and the turn-off of the unloading circuit pulls down a voltage of a power supply circuit of the auxiliary power supply; as a result, the auxiliary power supply is forcibly turned off.

CN102570787A discloses an unloading circuit module which comprises a solar panel, an input bus capacitor, the auxiliary power supply and the unloading circuit module.

CN202872632U discloses a restart prevention circuit for a photovoltaic grid-connected inverter.

US2012/235486A1 discloses a photovoltaic inverter having a controller, an auxiliary power and a buffering element.

JP2009247184A discloses a photovoltaic power system, which accurately determines whether to start the system, and suppresses iteration of frequent start-up/stand-by.

CN102355124A discloses a power absorption unit which is connected in parallel between a photovoltaic direct current (dc) positive busbar and a photovoltaic dc negative busbar.

### SUMMARY

The present invention provides a startup circuit for an auxiliary power supply of a photovoltaic inverter, so as to prevent a problem where the auxiliary power supply is forcibly turned off at an instant of time when an unloading circuit is turned off.

A first aspect provides a startup circuit for an auxiliary power supply of a photovoltaic inverter. The startup circuit, a capacitor of a direct current bus bar, the auxiliary power supply of the photovoltaic inverter, and at least one solar panel are all connected in parallel between positive and negative electrodes of the direct current bus bar, and the at least one solar panel supplies power to the auxiliary power supply through the capacitor of the direct current bus bar. The startup circuit includes: a power absorbing circuit, where the power absorbing circuit is connected in parallel between the positive and negative electrodes of the direct current bus bar, and the power absorbing circuit is configured to absorb power that is output by the at least one solar panel to the direct current bus bar, and stop absorbing the power that is output by the at least one solar panel to the direct current bus bar when a maximum power point MPP of the at least one solar panel is greater than or equal to startup power of the auxiliary power supply; and a startup control circuit, where the startup control circuit is connected in parallel between the positive and negative electrodes of the direct current bus bar, and the startup control circuit is configured to start up the auxiliary power supply when the power absorbing circuit is turned off and the capacitor of the direct current bus bar is charged to a first voltage, where the output power of the at least one solar panel is greater than the startup power of the auxiliary power supply when an output voltage of the at least one solar panel is the first voltage.

With reference to the first aspect, in an implementation manner of the first aspect, the power absorbing circuit includes: an unloading circuit, where the unloading circuit is connected in parallel between the positive and negative electrodes of the direct current bus bar, and the unloading circuit is configured to consume an electric charge generated by the at least one solar panel, so as to absorb the output power of the at least one solar panel; and a control circuit, where the control circuit is connected to the unloading circuit, and the control circuit is configured to turn off the unloading circuit when an output current of the at least one solar panel reaches a turn-off threshold, where the turn-off threshold is a current value of the output current of the at least one solar panel when the power absorbing circuit is turned off.

With reference to the first aspect or the foregoing implementation manner thereof, in another implementation manner of the first aspect, the unloading circuit includes: a power consumption device, configured to: when the unloading circuit is turned on, consume the electric charge generated by the at least one solar panel; and a first switch device, configured to turn off the unloading circuit under control of the control circuit, where one end of the power consumption device is connected to the positive electrode of the direct current bus bar, the other end of the power consumption device is connected to a first end of the first switch device, a second end of the first switch device is connected to the negative electrode of the direct current bus bar, and the control circuit turns off the first switch device when detecting that the output current of the at least one solar panel reaches the turn-off threshold, so that the power consumption device stops working.

With reference to the first aspect or either one of the foregoing implementation manners thereof, in another implementation manner of the first aspect, the first switch device is further configured to turn on the unloading circuit under the control of the control circuit, and the control circuit is further configured to: when the output current of the at least one solar panel is greater than a turn-on threshold, turn on the first switch device, so that the unloading circuit is turned on, where the turn-on threshold is less than the turn-off threshold.

With reference to the first aspect or any one of the foregoing implementation manners thereof, in another implementation manner of the first aspect, the control circuit includes: a first voltage divider and a second voltage divider, where one end of the first voltage divider is connected to the positive electrode of the direct current bus bar, the other end of the first voltage divider is connected to one end of the second voltage divider, the other end of the second voltage divider is connected to the negative electrode of the direct current bus bar, and the first voltage divider and the second voltage divider are configured to share a voltage between the positive and negative electrodes of the direct current bus bar; a third voltage divider and a fourth voltage divider, where one end of the third voltage divider is connected to the positive electrode of the direct current bus bar, the other end of the third voltage divider is connected to one end of the fourth voltage divider, the other end of the fourth voltage divider is connected to the negative electrode of the direct current bus bar, and the third voltage divider and the fourth voltage divider are configured to share the voltage between the positive and negative electrodes of the direct current bus bar; and a second switch device, where a first end of the second switch device, the other end of the first voltage divider, and a third end of the first switch device are connected to a first point, a second end of the second switch device is connected to the negative electrode of the direct current bus bar, a third end of the second switch device and the other end of the third voltage divider are connected to a second point, and the second switch device is configured to: when a voltage of the first point reaches a first threshold, turn on the first switch device, and when a voltage of the second point reaches a second threshold, turn off the first switch device, where the first threshold is a voltage value of the first point when the output current of the at least one solar panel is the turn-on threshold, and the second threshold is a voltage value of the second point when the output current of the at least one solar panel is the turn-off threshold.

With reference to the first aspect or any one of the foregoing implementation manners thereof, in another implementation manner of the first aspect, the power consumption device is a resistor; the first switch device is a switching transistor, and the first end, the second end, and the third end of the first switch device respectively correspond to a drain, a source, and a gate of the switching transistor; the second switch device is a switching transistor, and the first end, the second end, and the third end of the second switch device respectively correspond to a drain, a source, and a gate of the switching transistor; the first voltage divider is a resistor or a Zener diode; the second voltage divider is a resistor or a Zener diode; the third voltage divider is a resistor or a Zener diode; or the fourth voltage divider is a resistor or a Zener diode.

With reference to the first aspect or any one of the foregoing implementation manners thereof, in another implementation manner of the first aspect, the switching transistor is any one of a metal-oxide-semiconductor field-effect transistor MOSFET, a bipolar transistor, and an insulated gate bipolar transistor IGBT.

With reference to the first aspect or any one of the foregoing implementation manners thereof, in another implementation manner of the first aspect, the startup control circuit includes: a fifth voltage divider and a sixth voltage divider, where one end of the fifth voltage divider is connected to the positive electrode of the direct current bus bar, the other end of the fifth voltage divider is connected to one end of the sixth voltage divider, the other end of the sixth voltage divider is connected to the negative electrode of the direct current bus bar, and the fifth voltage divider and the sixth voltage divider share the voltage between the positive and negative electrodes of the direct current bus bar; and an energy storage device, where one end of the energy storage device, the other end of the fifth voltage divider, and one end of a control chip of the auxiliary power supply are connected to a point, the other end of the energy storage device is connected to the negative electrode of the direct current bus bar, and the energy storage device is configured to supply a startup voltage to the control chip.

With reference to the first aspect or any one of the foregoing implementation manners thereof, in another implementation manner of the first aspect, the energy storage device is a third capacitor; when the power absorbing circuit is turned off, parameter configurations of the fifth voltage divider, the sixth voltage divider, and the third capacitor enable the third capacitor to be charged to the startup voltage of the control chip after the capacitor of the direct current bus bar is charged to the first voltage.

With reference to the first aspect or any one of the foregoing implementation manners thereof, in another implementation manner of the first aspect, output power of the at least one solar panel at the first voltage is power corresponding to the maximum power point of the at least one solar panel under a current lighting condition.

With reference to the first aspect or any one of the foregoing implementation manners thereof, in another implementation manner of the first aspect, the fifth voltage divider is a resistor or a Zener diode, and the sixth voltage divider is a resistor or a Zener diode.

A second aspect provides a solar power supply system, which includes at least one solar panel, a photovoltaic inverter, and loads mounted to two ends of the photovoltaic inverter, where the photovoltaic inverter includes an auxiliary power supply and the startup circuit according to any one of claims 1 to 11.

In the present invention, the power absorbing circuit is turned off before the auxiliary power supply is started up, and the chip of the auxiliary power supply is started up when the output power of the solar panel is greater than output power of the auxiliary power supply, thereby preventing the problem where the auxiliary power supply is forcibly turned off.

### BRIEF DESCRIPTION OF DRAWINGS

To describe the technical solutions of the present invention more clearly, in the following the accompanying drawings are introduced describing embodiments of the present invention. Apparently, the accompanying drawings in the following description show merely some embodiments of the present invention.
FIG. 1 is a schematic diagram of a startup circuit for an auxiliary power supply of a photovoltaic inverter according to an embodiment of the present invention;
FIG. 2 is a schematic diagram of a startup circuit for an auxiliary power supply of a photovoltaic inverter according to another embodiment of the present invention;
FIG. 3 is a schematic diagram of a startup circuit for an auxiliary power supply of a photovoltaic inverter according to another embodiment of the present invention;
FIG. 4 is a schematic diagram of a startup circuit for an auxiliary power supply of a photovoltaic inverter according to another embodiment of the present invention;
FIG. 5 is a circuit diagram of a startup circuit according to an embodiment of the present invention;
FIG. 6 is shows graphs of parameters of a startup circuit for an auxiliary power supply of a photovoltaic inverter; and
FIG. 7 is a circuit diagram of a startup circuit according to another embodiment of the present invention.

### DESCRIPTION OF EMBODIMENTS

The following clearly and completely describes the technical solutions of the present invention with reference to the accompanying drawings of embodiments of the present invention. Apparently, the described embodiments are a part rather than all of the embodiments of the present invention.

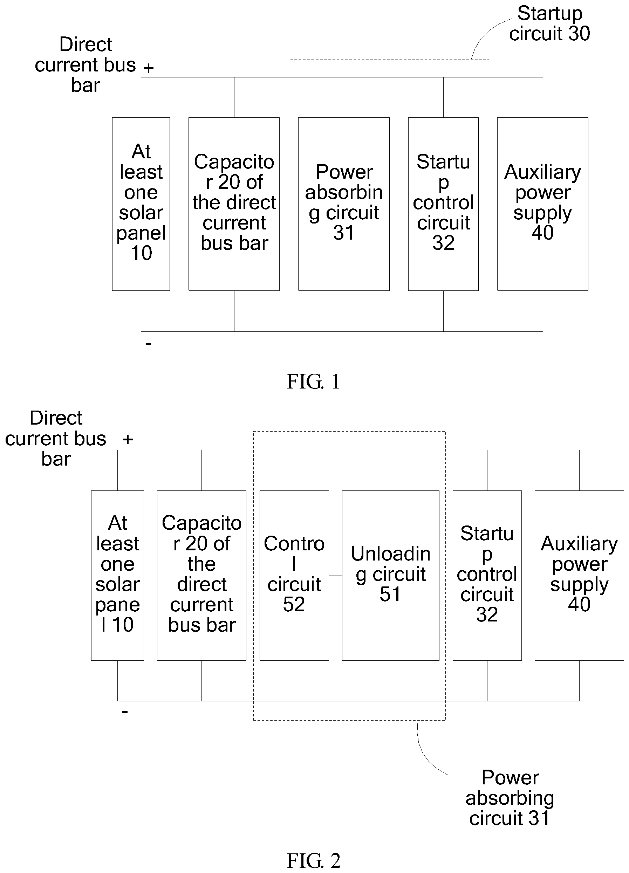

FIG. 1 is a schematic diagram of a startup circuit for an auxiliary power supply of a photovoltaic inverter according to an embodiment of the present invention. FIG. 1 includes at least one solar panel 10, a capacitor 20 of a direct current bus bar, a startup circuit 30, and an auxiliary power supply 40.

The startup circuit 30, the capacitor 20 of the direct current bus bar, the auxiliary power supply 40 of the photovoltaic inverter, and the at least one solar panel 10 are all connected in parallel between positive and negative electrodes of the direct current bus bar, and at least one solar panel 10 supplies power to the auxiliary power supply 40 through the capacitor 20 of the direct current bus bar. The startup circuit 30 may include: a power absorbing circuit 31, where the power absorbing circuit 31 is connected in parallel between the positive and negative electrodes of the direct current bus bar, and the power absorbing circuit 31 is configured to absorb power that is output by the at least one solar panel 10 to the direct current bus bar, and stop absorbing the power that is output by the at least one solar panel 10 to the direct current bus bar when a maximum power point (Maximum Power Point, MPP) of the at least one solar panel 10 is greater than or equal to startup power of the auxiliary power supply 40; and a startup control circuit 32, where the startup control circuit is connected in parallel between the positive and negative electrodes of the direct current bus bar, and the startup control circuit 32 is configured to start up the auxiliary power supply 40 when the power absorbing circuit 31 is turned off and the capacitor of the direct current bus bar is charged to a first voltage, where the output power of the at least one solar panel 10 is greater than the startup power of the auxiliary power supply 40 when an output voltage of the at least one solar panel 10 is the first voltage.

In this embodiment of the present invention, the power absorbing circuit is turned off before the auxiliary power supply is started up, and a chip of the auxiliary power supply is started up when the output power of the solar panel is greater than output power of the auxiliary power supply, thereby preventing a problem where the auxiliary power supply is forcibly turned off.

As can be seen from a P-V (power-voltage) characteristic curve of the solar panel, under a fixed lighting condition and with an increase in the output voltage of the solar panel, the output power of the solar panel increases first and then decreases. The foregoing MPP refers to maximum output power that can be reached by a solar panel of a fixed specification under a certain lighting condition. With enhancement of lighting, when the MPP of the at least one solar panel 10 is greater than or equal to the startup power of the auxiliary power supply, the power absorbing circuit 31 is turned off, and the capacitor 20 of the direct current bus bar starts to be charged. When the capacitor 20 of the direct current bus bar is charged to the first voltage (output power of the solar panel 10 at the first voltage is greater than the startup power of the auxiliary power supply 40), the auxiliary power supply 40 is turned on by turning on the startup control circuit 32.

It should be noted that before the at least one solar panel 10 satisfies the foregoing turn-off condition of the power absorbing circuit 31, the power absorbing circuit 31 absorbs the output power of the at least one solar panel 10, thereby preventing the problem mentioned in BACKGROUND that the auxiliary power supply is repeatedly turned on and turned off, which is caused by a "false high" open circuit voltage at two ends of the solar panel. However, a specific manner of absorbing the output power of the solar panel 10 by the power absorbing circuit 31 is not limited in this embodiment of the present invention. For example, the power absorbing circuit 31 may include a power consumption resistor, and the power consumption resistor consumes an electric charge at two ends of the at least one solar panel 10 when the power absorbing circuit 31 is in a turned-on state; or the power absorbing circuit 31 may include a switching transistor, and the electric charge is consumed by heating of the switching transistor; or the power absorbing circuit 31 may include a fan, and the electric charge is consumed by rotation of the fan.

It should be further noted that the power absorbing circuit 31 may always be in the turned-on state before being turned off. Alternatively, the power absorbing circuit 31 may be in a turned-off state under a condition of weak lighting, and the power absorbing circuit 31 is turned on with an increase in lighting intensity, thereby preventing phenomenon of the "false high" voltage at two ends of the solar panel. When the MPP of the at least one solar panel 10 is greater than or equal to the startup power of the auxiliary power supply 40, the power absorbing circuit 31 is turned off again.

Optionally, as an embodiment, as shown in FIG. 2, the power absorbing circuit 31 may include: an unloading circuit 51, where the unloading circuit 51 is connected in parallel between the positive and negative electrodes of the direct current bus bar, and the unloading circuit 51 is configured to consume an electric charge generated by the at least one solar panel 10, so as to absorb the output power of the at least one solar panel 10; and a control circuit 52, where the control circuit 52 is connected to the unloading circuit 51, and the control circuit 52 is configured to turn off the unloading circuit 51 when an output current of the at least one solar panel 10 reaches a turn-off threshold, where the turn-off threshold is a current value of the output current of the at least one solar panel 10 when the power absorbing circuit 31 is turned off. Optionally, the control circuit 52 is configured to turn off the unloading circuit 51 when the output voltage of the at least one solar panel 10 reaches a voltage threshold, where the voltage threshold is a voltage value of the output voltage of the at least one solar panel 10 when the power absorbing circuit 31 is turned off. Optionally, the output power of the at least one solar panel 10 may further be selected as a threshold condition for turning off the power absorbing circuit 31, which is not specifically limited in this embodiment of the present invention.

It should be noted that, a form of the unloading circuit 51 is not specifically limited in this embodiment of the present invention, as long as the circuit can consume the electric charge at two ends of the solar panel when the circuit is turned on.

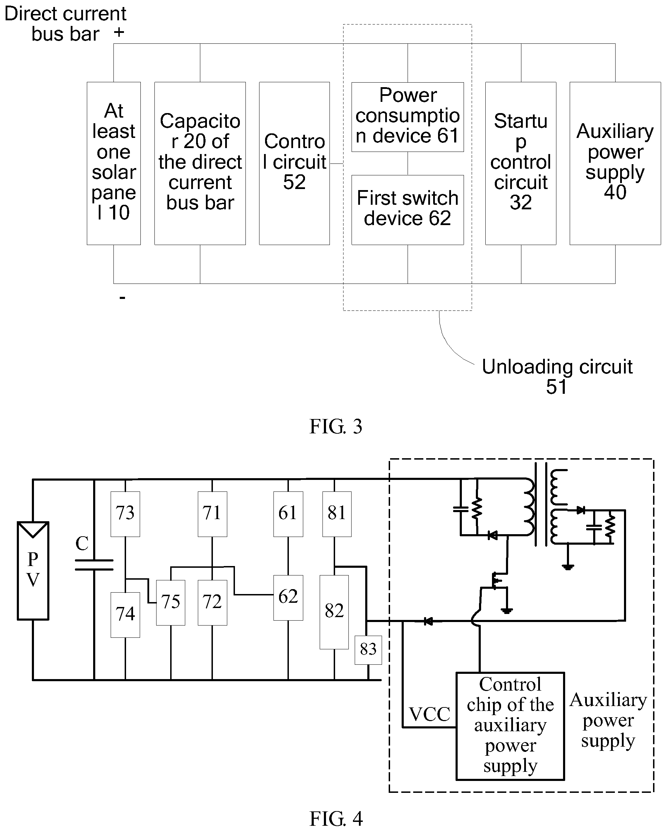

Optionally, as an embodiment, as shown in FIG. 3, the unloading circuit 51 may include: a power consumption device 61, configured to: when the unloading circuit 51 is turned on, consume the electric charge generated by at least one solar panel 10; and a first switch device 62, configured to turn off the unloading circuit 51 under control of the control circuit 52, where one end of the power consumption device 61 is connected to the positive electrode of the direct current bus bar, the other end of the power consumption device 61 is connected to a first end of the first switch device 62, a second end of the first switch device 62 is connected to the negative electrode of the direct current bus bar, and the control circuit 52 turns off the first switch device 62 when detecting that the output current of the at least one solar panel 10 reaches the turn-off threshold, so that the power consumption device 61 stops working.

It should be understood that a specific form of the first switch device 62 is determined by factors such as a control manner of the control circuit 52, and the first switch device 62 may be a common switch or may also be a device such as a switching transistor.

Optionally, as an embodiment, the first switch device 62 is further configured to turn on the unloading circuit 51 under the control of the control circuit 52, and the control circuit 52 is further configured to: when the output current of the at least one solar panel 10 is greater than a turn-on threshold, turn on the first switch device 62, so that the unloading circuit 51 is turned on, where the turn-on threshold is less than the turn-off threshold.

It should be noted that a specific form of the control circuit 52 and a specific manner of controlling the unloading circuit 51 are not limited in this embodiment of the present invention. As shown in FIG. 4, the control circuit 52 may include: a first voltage divider 71 and a second voltage divider 72, where one end of the first voltage divider 71 is connected to the positive electrode of the direct current bus bar, the other end of the first voltage divider 71 is connected to one end of the second voltage divider 72, the other end of the second voltage divider 72 is connected to the negative electrode of the direct current bus bar, and the first voltage divider 71 and the second voltage divider 72 are configured to share a voltage between the positive and negative electrodes of the direct current bus bar; a third voltage divider 73 and a fourth voltage divider 74, where one end of the third voltage divider 73 is connected to the positive electrode of the direct current bus bar, the other end of the third voltage divider 73 is connected to one end of the fourth voltage divider 74, the other end of the fourth voltage divider 74 is connected to the negative electrode of the direct current bus bar, and the third voltage divider 73 and the fourth voltage divider 74 are configured to share the voltage between the positive and negative electrodes of direct current bus bar; and a second switch device 75, where a first end of the second switch device 75, the other end of the first voltage divider 71, and a third end of the first switch device 62 are connected to a first point, a second end of the second switch device 75 is connected to the negative electrode of the direct current bus bar, a third end of the second switch device 75 and the other end of the third voltage divider 73 are connected to a second point, and the second switch device 75 is configured to: when a voltage of the first point reaches a first threshold, turn on the first switch device 62, and when a voltage of the second point reaches a second threshold, turn off the first switch device 62, where the first threshold is a voltage value of the first point when the output current of the at least one solar panel 10 is the turn-on threshold, and the second threshold is a voltage value of the second point when the output current of the at least one solar panel 10 is the turn-off threshold.

In this case, the power consumption device 61 is a resistor; the first switch device 62 is a switching transistor, and the first end, the second end, and the third end of the first switch device 62 respectively correspond to a drain, a source, and a gate of the switching transistor; the second switch device 75 is a switching transistor, and the first end, the second end, and the third end of the second switch device 75 respectively correspond to a drain, a source, and a gate of the switching transistor; the first voltage divider 71 is a resistor or a Zener diode; the second voltage divider 72 is a resistor or a Zener diode; the third voltage divider 73 is a resistor or a Zener diode; or the fourth voltage divider 74 is a resistor or a Zener diode.

It should be understood that the switching transistor may be a metal-oxide-semiconductor field-effect transistor (MOSFET), a bipolar transistor, and an insulated gate bipolar transistor (Insulated Gate Bipolar Transistor, IGBT).

Optionally, as an embodiment, as shown in FIG. 4, the startup control circuit 32 may include: a fifth voltage divider 81 and a sixth voltage divider 82, where one end of the fifth voltage divider 81 is connected to the positive electrode of the direct current bus bar, the other end of the fifth voltage divider 81 is connected to one end of the sixth voltage divider 82, the other end of the sixth voltage divider 82 is connected to the negative electrode of the direct current bus bar, and the fifth voltage divider 81 and the sixth voltage divider 82 share the voltage between the positive and negative electrodes of the direct current bus bar; and an energy storage device 83, where one end of the energy storage device 83, the other end of the fifth voltage divider 81, and one end of a control chip of the auxiliary power supply are connected to a point, the other end of the energy storage device 83 is connected to the negative electrode of the direct current bus bar, and the energy storage device 83 is configured to supply a startup voltage to the control chip.

It should be understood that the fifth voltage divider 81 and the sixth voltage divider 82 may be a resistor or a Zener diode, and the divider may be one device or may also be a combination of multiple devices, for example, the fifth voltage divider 81 is a Zener diode plus a resistor, and the sixth voltage divider 82 is a resistor. The connection between one end of the energy storage device 83 and one end of the control chip may specifically refer to that the energy storage device 83 is connected to a power supply pin of the control chip.

In the conventional technology, when a voltage between two ends of a direct current bus bar reaches a startup voltage of an auxiliary power supply, the auxiliary power supply is started up. However, when the auxiliary power supply is started up, an unloading circuit is not turned off, and a resistor on the unloading circuit continues to consume output power of a solar panel. According to P=U²/R, the power consumption resistor clamps the voltage of the direct current bus bar at a voltage point corresponding to power of the power consumption resistor. Under a fixed lighting condition, an output characteristic curve of a solar panel of a fixed specification is fixed. When the startup voltage of the auxiliary power supply is reached, according to the output characteristic curve, an output power value of the solar panel corresponding to the startup voltage may satisfy neither consumption power PI of the power consumption resistor nor startup power P2 of the auxiliary power supply under a condition of weak lighting. Therefore, the auxiliary power supply is started after lighting further intensifies until a power point corresponding to a startup voltage point on the output characteristic curve of the solar panel is not less than P1+P2 at least, preventing the auxiliary power supply from being repeatedly turned on and off due to shortage of the startup power.

When the auxiliary power supply is started up in the foregoing manner of starting up the auxiliary power supply, relatively high output power of the solar panel is required. When a specification of the solar panel is fixed, relatively strong lighting is required for starting up the auxiliary power supply, and therefore startup time is relatively late. However, if the output power of the solar panel is increased by increasing an area of the solar panel, this solution leads to an unnecessary resource waste.

Optionally, as an embodiment, the energy storage device 83 is a third capacitor; when the power absorbing circuit 31 is turned off, parameter configurations of the fifth voltage divider 81, the sixth voltage divider 82, and the third capacitor enable the third capacitor to be charged to the startup voltage of the control chip of the auxiliary power supply after the capacitor 20 of the direct current bus bar is charged to the first voltage.

In this embodiment of the present invention, because the unloading circuit 51 has been turned off before the auxiliary power supply 40 is started up, for the startup power, power consumption of the unloading circuit 51 does not need to be considered. In addition, because the unloading circuit 51 has been turned off, the problem where the power consumption resistor clamps the voltage of the direct current bus bar at the voltage point corresponding to the consumption power thereof does not exist, and charging speeds of the third capacitor 83 and the capacitor 20 of the direct current bus bar can be controlled; therefore, after the direct current bus bar is charged to the first voltage, the third capacitor 83 is charged to the startup voltage of the control chip. The output power of the at least one solar panel 10 at the first voltage is greater than the startup power of the auxiliary power supply 40. Further, the first voltage may also be set as a voltage corresponding to the maximum power point. In this case, once the maximum power point exceeds the startup power of the auxiliary power supply, the auxiliary power supply may be started up. Compared with the solution in the prior art, in the solution of this embodiment of the present invention, the auxiliary power supply is started up earlier. In addition, the power consumption of the unloading circuit does not need to be considered in the solution of this embodiment of the present invention; therefore, compared with the solution in the prior art, the solution of this embodiment of the present invention has smaller startup power.

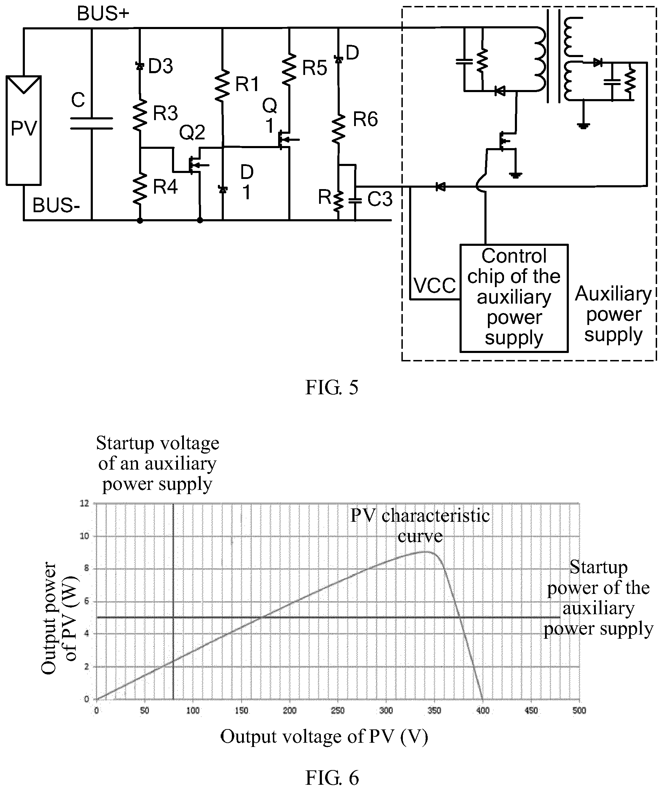

The following describes the embodiments of the present invention in more detail with reference to specific examples. It should be noted that examples in FIG. 5 to FIG. 7 are merely used to help a person skilled in the art understand the embodiments of the present invention, but are not intended to limit the embodiments of the present invention to the exemplified specific numerical values or specific scenarios. Apparently, a person skilled in the art may make various equivalent modifications or changes according to the given examples in FIG. 5 to FIG. 7, and such modifications or changes also fall within the scope of the embodiments of the present invention.

FIG. 5 is a circuit diagram of a startup circuit according to an embodiment of the present invention. In FIG. 5, the power consumption device 61 is a resistor R5, the first switch device 62 is a switching transistor Q1, the second switch device 75 is a switching transistor Q2, the first voltage divider 71 is a resistor R1, the second voltage divider 72 is a Zener diode D1, the third voltage divider 73 is a Zener diode D3 and a resistor R3, the fourth voltage divider 74 is a resistor R4, the fifth voltage divider 81 is a Zener D and a resistor R6, the sixth voltage divider 82 is a resistor R, the energy storage device 83 is a capacitor C3, the capacitor 20 of the direct current bus bar is a capacitor C, the at least one solar panel 10 is PV, the control chip of the auxiliary power supply is a VCC, BUS+ corresponds to the positive electrode of the direct current bus bar of the photovoltaic inverter, and BUS- corresponds to the negative electrode of the direct current bus bar of the photovoltaic inverter.

As shown in FIG. 6, assuming that the startup voltage of the auxiliary power supply 40 is 80V, the startup voltage of the control chip of the auxiliary power supply is 7.2V, and the startup power of the auxiliary power supply 40 is 5W, when lighting is weak, the resistor R5 is in a turned-off state; with intensification of lighting, when a voltage of the BUS reaches, for example, 30V (at this time, the corresponding output current of the solar panel reaches the turn-on threshold) and when the resistor R1 and the Zener diode D1 perform voltage dividing to enable a voltage of a gate of Q1 to reach a certain preset value (corresponding to the first threshold), a drain and a source of Q1 are connected, and R5 starts to consume an electric charge on the solar panel. With further intensification of lighting, when the voltage of the BUS reaches 60V (at this time, the corresponding output current of the solar panel reaches the turn-off threshold) and when voltage dividing by the Zener diode D3, the resistor R3, and the resistor R4 enables a voltage of a gate of Q2 to reach another preset value (corresponding to the second threshold), a drain and a source of Q2 are connected, the voltage of the gate of Q1 is pulled down, and the resistor R5 stops consuming power; R1 may be set as a resistor with a great resistance and therefore barely consumes an electric charge generated by the PV. When the resistor R5 stops working, the capacitor C and the capacitor C3 start to be charged (when the resistor R5 works, the startup control circuit may be enabled to be in an open circuit state by setting the Zener diode D, or a voltage between two ends of the capacitor C3 is clamped at a voltage that is less than the startup voltage of the control chip of the auxiliary power supply 40). By adjusting parameters of the Zener diode D, the resistor R6, and the resistor R, the capacitor C has been charged to about 300V (corresponding to the first voltage) when the capacitor C3 is charged to the startup voltage of the control chip of the auxiliary power supply 40, that is, 7.2V. As can be seen from a PV characteristic curve of the solar panel shown in FIG. 6, the output power of the PV corresponding to the voltage of 300V is about 8W, which is higher than the startup power of the auxiliary power supply 40, that is, 5W; therefore the auxiliary power supply 40 can be normally started up.

It should be noted that a voltage regulation value of the Zener diode D may be adjusted, so that the startup control circuit 32 is in a turned-off state when the resistor R5 works and the startup control circuit 32 is turned on when the resistor R5 is turned off or the voltage between two ends of C3 is clamped at a certain voltage value that is less than the startup voltage of the auxiliary power supply 40 when the resistor R5 works.

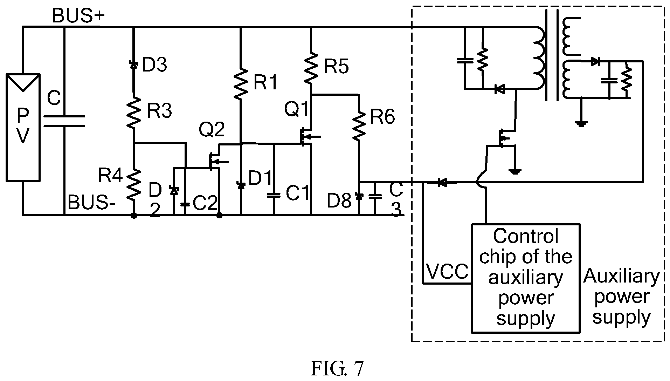

FIG. 7 is a circuit diagram of a startup circuit according to another embodiment of the present invention. FIG. 7 is similar to FIG. 5, and a difference lies in that the fifth voltage divider is R5 and R6, and the sixth voltage divider is a Zener diode D8. A voltage divider has various combination forms, and here is only an example for description. In addition, a capacitor C1, a capacitor C2, and a Zener diode D2 are added to enhance the stability of a circuit. Certainly, these devices for stabilizing the circuit may also be added in the embodiment of FIG. 5.

In FIG. 7, when the resistor R5 works, the capacitor C3 is grounded; when the unloading circuit 51 is turned off, the capacitor C3 starts to be charged.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device, or the like) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the present invention.

## Claims

1. A startup circuit for an auxiliary power supply of a photovoltaic inverter, wherein:
the startup circuit (30), a capacitor (20) of a direct current bus bar, an auxiliary power supply (40) of the photovoltaic inverter, and at least one solar panel (10) are all connected in parallel between positive and negative electrodes of a direct current bus bar, and the at least one solar panel supplies power to the auxiliary power supply through the capacitor of the direct current bus bar; and
the startup circuit comprises:
a power absorbing circuit (31), wherein the power absorbing circuit is connected in parallel between the positive and negative electrodes of the direct current bus bar, and the power absorbing circuit (31) is configured to absorb power that is output by the at least one solar panel to the direct current bus bar; and
a startup control circuit (32), wherein the startup control circuit is connected in parallel between the positive and negative electrodes of the direct current bus bar; and
**characterized in that**
the power absorbing circuit (31) is configured to stop absorbing the power that is output by the at least one solar panel to the direct current bus bar, when a maximum power point MPP of the at least one solar panel is greater than or equal to startup power of the auxiliary power supply; and
the startup control circuit (32) is configured to start up the auxiliary power supply when the power absorbing circuit is turned off and the capacitor of the direct current bus bar is charged to a first voltage, wherein the first voltage is corresponding to an output voltage of the at least one solar panel when the output power of the at least one solar panel is greater than the startup power of the auxiliary power supply.

2. The startup circuit according to claim 1, wherein the power absorbing circuit (31) comprises:
an unloading circuit (51), wherein the unloading circuit is connected in parallel between the positive and negative electrodes of the direct current bus bar, and the unloading circuit is configured to consume an electric charge generated by the at least one solar panel, so as to absorb the output power of the at least one solar panel; and
a control circuit (52), wherein the control circuit is connected to the unloading circuit, and the control circuit is configured to turn off the unloading circuit when an output current of the at least one solar panel reaches a turn-off threshold, wherein the turn-off threshold is a current value of the output current of the at least one solar panel when a maximum power point MPP of the at least one solar panel is greater than or equal to startup power of the auxiliary power supply.

3. The startup circuit according to claim 2, wherein:
the unloading circuit (51) comprises:
a power consumption device (61), configured to: when the unloading circuit is turned on, consume the electric charge generated by the at least one solar panel; and
a first switch device (62), configured to turn off the unloading circuit under control of the control circuit, wherein,
one end of the power consumption device (61) is connected to the positive electrode of the direct current bus bar, the other end of the power consumption device is connected to a first end of the first switch device, and a second end of the first switch device is connected to the negative electrode of the direct current bus bar; when detecting that the output current of the at least one solar panel reaches the turn-off threshold, the control circuit turns off the first switch device, so that the power consumption device stops working.

4. The startup circuit according to claim 3, wherein the first switch device (62) is further configured to turn on the unloading circuit under the control of the control circuit, and the control circuit is further configured to: when the output current of the at least one solar panel is greater than a turn-on threshold, turn on the first switch device, so that the unloading circuit is turned on, wherein the turn-on threshold is less than the turn-off threshold.

5. The startup circuit according to claim 4, wherein:
the control circuit (52) comprises:
a first voltage divider (71) and a second voltage divider (72), configured to share a voltage between the positive and negative electrodes of the direct current bus bar, wherein one end of the first voltage divider is connected to the positive electrode of the direct current bus bar, the other end of the first voltage divider is connected to one end of the second voltage divider, and the other end of the second voltage divider is connected to the negative electrode of the direct current bus bar;
a third voltage divider (73) and a fourth voltage divider (74), configured to share the voltage between the positive and negative electrodes of the direct current bus bar, wherein one end of the third voltage divider is connected to the positive electrode of the direct current bus bar, the other end of the third voltage divider is connected to one end of the fourth voltage divider, and the other end of the fourth voltage divider is connected to the negative electrode of the direct current bus bar; and
a second switch device (75), configured to: when a voltage of a first point reaches a first threshold, turn on the first switch device, wherein a first end of the second switch device, the other end of the first voltage divider, and a third end of the first switch device are connected to the first point, a second end of the second switch device is connected to the negative electrode of the direct current bus bar, a third end of the second switch device and the other end of the third voltage divider are connected to a second point; and when a voltage of the second point reaches a second threshold, turn off the first switch device, wherein the first threshold is a voltage value of the first point when the output current of the at least one solar panel is the turn-on threshold, and the second threshold is a voltage value of the second point when the output current of the at least one solar panel is the turn-off threshold.

6. The startup circuit according to claim 5, wherein:
the power consumption device (61) is a resistor; or
the first switch device (62) is a switching transistor, and the first end, the second end, and the third end of the first switch device respectively correspond to a drain, a source, and a gate of the switching transistor; or
the second switch device (75) is a switching transistor, and the first end, the second end, and the third end of the second switch device respectively correspond to a drain, a source, and a gate of the switching transistor; or
the first voltage divider (71) is a resistor or a Zener diode; or
the second voltage divider (72) is a resistor or a Zener diode; or
the third voltage divider (73) is a resistor or a Zener diode; or
the fourth voltage divider (74) is a resistor or a Zener diode.

7. The startup circuit according to claim 6, wherein the switching transistor is any one of a metal-oxide-semiconductor field-effect transistor MOSFET, a bipolar transistor, and an insulated gate bipolar transistor IGBT.

8. The startup circuit according to any one of claims 1 to 7, wherein:
the startup control circuit (32) comprises:
a fifth voltage divider (81) and a sixth voltage divider (82), configured to share the voltage between the positive and negative electrodes of the direct current bus bar, wherein one end of the fifth voltage divider is connected to the positive electrode of the direct current bus bar, the other end of the fifth voltage divider is connected to one end of the sixth voltage divider, and the other end of the sixth voltage divider is connected to the negative electrode of the direct current bus bar; and
an energy storage device (83), configured to supply a startup voltage to a control chip, wherein one end of the energy storage device, the other end of the fifth voltage divider, and one end of the control chip of the auxiliary power supply are connected to a point, and the other end of the energy storage device is connected to the negative electrode of the direct current bus bar.

9. The startup circuit according to claim 8, wherein the energy storage device (83) is a third capacitor, and when the power absorbing circuit is turned off, parameter configurations of the fifth voltage divider, the sixth voltage divider, and the third capacitor enable the third capacitor to be charged to the startup voltage of the control chip after the capacitor of the direct current bus bar is charged to the first voltage.

10. The startup circuit according to claim 9, wherein output power of the at least one solar panel at the first voltage is power corresponding to the maximum power point of the at least one solar panel under a current lighting condition.

11. The startup circuit according to any one of claims 8 to 10, wherein the fifth voltage divider (81) is a resistor or a Zener diode, and the sixth voltage divider (82) is a resistor or a Zener diode.

12. A solar power supply system, comprising at least one solar panel, a photovoltaic inverter, and loads mounted to two ends of the photovoltaic inverter, wherein the photovoltaic inverter comprises an auxiliary power supply and the startup circuit according to any one of claims 1 to 11.

## Patentansprüche

1. Anlaufschaltung für eine Hilfsstromversorgung eines Photovoltaikwechselrichters, wobei:
die Anlaufschaltung (30), ein Kondensator (20) einer Gleichstrom-Sammelschiene, eine Hilfsstromversorgung (40) des Photovoltaikwechselrichters sowie mindestens ein Solarpanel (10) alle zwischen positiver und negativer Elektrode einer Gleichstrom-Sammelschiene parallel geschaltet sind, und das mindestens eine Solarpanel der Hilfsstromversorgung durch den Kondensator der Gleichstrom-Sammelschiene Strom zuführt; und
die Anlaufschaltung umfasst:
eine Strom absorbierende Schaltung (31), wobei die Strom absorbierende Schaltung zwischen der positiven und negativen Elektrode der Gleichstrom-Sammelschiene parallel geschaltet ist, und die Strom absorbierende Schaltung (31) derart ausgestaltet ist, dass sie Strom absorbiert, der von dem mindestens einen Solarpanel an die Gleichstrom-Sammelschiene abgegeben wird; und
eine Anlaufsteuerschaltung (32), wobei die Anlaufsteuerschaltung zwischen der positiven und negativen Elektrode der Gleichstrom-Sammelschiene parallel geschaltet ist; und
**dadurch gekennzeichnet, dass**
die Strom absorbierende Schaltung (31) derart ausgestaltet ist, dass sie ein Absorbieren des Stroms beendet, der von dem mindestens einen Solarpanel an die Gleichstrom-Sammelschiene abgegeben wird, wenn ein Punkt maximaler Leistung (maximum power point, MPP) des mindestens einen Solarpanels größer gleich der Anlaufleistung der Hilfsstromversorgung ist; und
die Anlaufsteuerschaltung (32) derart ausgestaltet ist, dass sie die Hilfsstromversorgung startet, wenn die Strom absorbierende Schaltung ausgeschaltet und der Kondensator der Gleichstrom-Sammelschiene auf eine erste Spannung aufgeladen ist, wobei die erste Spannung einer Ausgangsspannung des mindestens einen Solarpanels entspricht, wenn die Ausgangsleistung des mindestens einen Solarpanels größer als die Anlaufleistung der Hilfsstromversorgung ist.

2. Anlaufschaltung nach Anspruch 1, wobei die Strom absorbierende Schaltung (31) umfasst:
eine Entlastungsschaltung (51), wobei die Entlastungsschaltung zwischen der positiven und negativen Elektrode der Gleichstrom-Sammelschiene parallel geschaltet ist, und die Entlastungsschaltung derart ausgestaltet ist, dass sie eine von dem mindestens einen Solarpanel erzeugte elektrische Ladung verbraucht, um die Ausgangsleistung des mindestens einen Solarpanels zu absorbieren; und
eine Steuerschaltung (52), wobei die Steuerschaltung mit der Entlastungsschaltung verbunden ist, und die Steuerschaltung derart ausgestaltet ist, dass sie die Entlastungsschaltung ausschaltet, wenn ein Ausgangsstrom des mindestens einen Solarpanels einen Ausschalt-Schwellenwert erreicht, wobei der Ausschalt-Schwellenwert ein Stromwert des Ausgangsstroms des mindestens einen Solarpanels ist, wenn ein Punkt maximaler Leistung MPP des mindestens einen Solarpanels größer gleich der Anlaufleistung der Hilfsstromversorgung ist.

3. Anlaufschaltung nach Anspruch 2, wobei:
die Entlastungsschaltung (51) umfasst:
eine Stromverbrauchsvorrichtung (61), die derart ausgestaltet ist, dass sie: wenn die Entlastungsschaltung eingeschaltet ist, die von dem mindestens einen Solarpanel erzeugte elektrische Ladung verbraucht; und
eine erste Schaltervorrichtung (62), die derart ausgestaltet ist, dass sie die Entlastungsschaltung unter Steuerung der Steuerschaltung ausschaltet, wobei
ein Ende der Stromverbrauchsvorrichtung (61) mit der positiven Elektrode der Gleichstrom-Sammelschiene verbunden ist, das andere Ende der Stromverbrauchsvorrichtung mit einem ersten Ende der ersten Schaltervorrichtung verbunden ist, und ein zweites Ende der ersten Schaltervorrichtung mit der negativen Elektrode der Gleichstrom-Sammelschiene verbunden ist; wenn erkannt wird, dass der Ausgangsstrom des mindestens einen Solarpanels den Ausschalt-Schwellenwert erreicht, die Steuerschaltung die erste Schaltervorrichtung ausschaltet, sodass die Stromverbrauchsvorrichtung zu arbeiten aufhört.

4. Anlaufschaltung nach Anspruch 3, wobei die erste Schaltervorrichtung (62) ferner derart ausgestaltet ist, dass sie die Entlastungsschaltung unter der Steuerung der Steuerschaltung einschaltet, und die Steuerschaltung ferner derart ausgestaltet ist, dass sie: wenn der Ausgangsstrom des mindestens einen Solarpanels größer ist als ein Einschalt-Schwellenwert, die erste Schaltervorrichtung einschaltet, sodass die Entlastungsschaltung eingeschaltet wird, wobei der Einschalt-Schwellenwert weniger als der Ausschalt-Schwellenwert ist.

5. Anlaufschaltung nach Anspruch 4, wobei:
die Steuerschaltung (52) umfasst:
einen ersten Spannungsteiler (71) und einen zweiten Spannungsteiler (72), die derart ausgestaltet sind, dass sie eine Spannung zwischen der positiven und negativen Elektrode der Gleichstrom-Sammelschiene gemeinsam nutzen, wobei ein Ende des ersten Spannungsteilers mit der positiven Elektrode der Gleichstrom-Sammelschiene verbunden ist, das andere Ende des ersten Spannungsteilers mit einem Ende des zweiten Spannungsteilers verbunden ist und das andere Ende des zweiten Spannungsteilers mit der negativen Elektrode der Gleichstrom-Sammelschiene verbunden ist;
einen dritten Spannungsteiler (73) und einen vierten Spannungsteiler (74), die derart ausgestaltet sind, dass sie die Spannung zwischen der positiven und negativen Elektrode der Gleichstrom-Sammelschiene gemeinsam nutzen, wobei ein Ende des dritten Spannungsteilers mit der positiven Elektrode der Gleichstrom-Sammelschiene verbunden ist, das andere Ende des dritten Spannungsteilers mit einem Ende des vierten Spannungsteilers verbunden ist und das andere Ende des vierten Spannungsteilers mit der negativen Elektrode der Gleichstrom-Sammelschiene verbunden ist; und
eine zweite Schaltervorrichtung (75), die derart ausgestaltet ist, dass sie: wenn eine Spannung eines ersten Punktes einen ersten Schwellenwert erreicht, die erste Schaltervorrichtung einschaltet, wobei ein erstes Ende der zweiten Schaltervorrichtung, das andere Ende des ersten Spannungsteilers und ein drittes Ende der ersten Schaltervorrichtung mit dem ersten Punkt verbunden sind, ein zweites Ende der zweiten Schaltervorrichtung mit der negativen Elektrode der Gleichstrom-Sammelschiene verbunden ist, ein drittes Ende der zweiten Schaltervorrichtung und das andere Ende des dritten Spannungsteilers mit einem zweiten Punkt verbunden sind; und wenn eine Spannung des zweiten Punktes einen zweiten Schwellenwert erreicht, die erste Schaltervorrichtung ausschaltet, wobei der erste Schwellenwert ein Spannungswert des ersten Punktes ist, wenn der Ausgangsstrom des mindestens einen Solarpanels der Einschalt-Schwellenwert ist, und der zweite Schwellenwert ein Spannungswert des zweiten Punktes ist, wenn der Ausgangsstrom des mindestens einen Solarpanels der Ausschalt-Schwellenwert ist.

6. Anlaufschaltung nach Anspruch 5, wobei:
die Stromverbrauchsvorrichtung (61) ein Widerstand ist; oder
die erste Schaltervorrichtung (62) ein Schalttransistor ist, und das erste Ende, das zweite Ende und das dritte Ende der ersten Schaltervorrichtung jeweils einem "Drain", einer "Source" und einem "Gate" des Schalttransistors entsprechen; oder
die zweite Schaltervorrichtung (75) ein Schalttransistor ist, und das erste Ende, das zweite Ende und das dritte Ende der zweiten Schaltervorrichtung jeweils einem "Drain", einer "Source" und einem "Gate" des Schalttransistors entsprechen; oder
der erste Spannungsteiler (71) ein Widerstand oder eine Zener-Diode ist; oder
der zweite Spannungsteiler (72) ein Widerstand oder eine Zener-Diode ist; oder
der dritte Spannungsteiler (73) ein Widerstand oder eine Zener-Diode ist; oder
der vierte Spannungsteiler (74) ein Widerstand oder eine Zener-Diode ist.

7. Anlaufschaltung nach Anspruch 6, wobei der Schalttransistor einer aus einem MetallOxid-Halbleiter-Feldeffekttransistor (metal-oxide-semiconductor field-effect transistor, MOSFET), einem Bipolartransistor und einem Bipolartransistor mit isolierter Gate-Elektrode (insulated gate bipolar transistor, IGBT) ist.

8. Anlaufschaltung nach einem der Ansprüche 1 bis 7, wobei:
die Anlaufsteuerschaltung (32) umfasst:
einen fünften Spannungsteiler (81) und einen sechsten Spannungsteiler (82), die derart ausgestaltet sind, dass sie die Spannung zwischen der positiven und negativen Elektrode der Gleichstrom-Sammelschiene gemeinsam nutzen, wobei ein Ende des fünften Spannungsteilers mit der positiven Elektrode der Gleichstrom-Sammelschiene verbunden ist, das andere Ende des fünften Spannungsteilers mit einem Ende des sechsten Spannungsteilers verbunden ist und das andere Ende des sechsten Spannungsteilers mit der negativen Elektrode der Gleichstrom-Sammelschiene verbunden ist; und
eine Energiespeichervorrichtung (83), die derart ausgestaltet ist, dass sie eine Anlaufspannung einem Steuerchip zuführt, wobei ein Ende der Energiespeichervorrichtung, das andere Ende des fünften Spannungsteilers und ein Ende des Steuerchips der Hilfsstromversorgung mit einem Punkt verbunden sind, und das andere Ende der Energiespeichervorrichtung mit der negativen Elektrode der Gleichstrom-Sammelschiene verbunden ist.

9. Anlaufschaltung nach Anspruch 8, wobei die Energiespeichervorrichtung (83) ein dritter Kondensator ist, und wenn die Strom absorbierende Schaltung ausgeschaltet ist, Parameterkonfigurationen des fünften Spannungsteilers, des sechsten Spannungsteilers und des dritten Kondensators ermöglichen, dass der dritte Kondensator auf die Anlaufspannung des Steuerchips geladen wird, nachdem der Kondensator der Gleichstrom-Sammelschiene auf die erste Spannung geladen wurde.

10. Anlaufschaltung nach Anspruch 9, wobei eine Ausgangsleistung des mindestens einen Solarpanels bei der ersten Spannung eine Leistung ist, die dem Punkt maximaler Leistung des mindestens einen Solarpanels unter einer aktuellen Beleuchtungsbedingung entspricht.

11. Anlaufschaltung nach einem der Ansprüche 8 bis 10, wobei der fünfte Spannungsteiler (81) ein Widerstand oder eine Zener-Diode ist und der sechste Spannungsteiler (82) ein Widerstand oder eine Zener-Diode ist.

12. Solarstrom-Versorgungssystem, das mindestens ein Solarpanel, einen Photovoltaikwechselrichter sowie an zwei Enden des Photovoltaikwechselrichters angebrachte Lasten umfasst, wobei der Photovoltaikwechselrichter eine Hilfsstromversorgung und die Anlaufschaltung nach einem der Ansprüche 1 bis 11 umfasst.

## Revendications

1. Circuit de démarrage pour une alimentation électrique auxiliaire d'un onduleur photovoltaïque :
le circuit de démarrage (30), un condensateur (20) d'une barre bus en courant continu, une alimentation électrique auxiliaire (40) de l'onduleur photovoltaïque et au moins un panneau solaire (10) étant tous reliés en parallèle entre des électrodes positive et négative d'une barre bus en courant continu, et l'au moins un panneau solaire alimentant électriquement l'alimentation électrique auxiliaire par le biais du condensateur de la barre bus en courant continu ; et
le circuit de démarrage comprenant :
un circuit d'absorption de puissance (31), le circuit d'absorption de puissance étant relié en parallèle entre les électrodes positive et négative de la barre bus en courant continu, et le circuit d'absorption de puissance (31) étant configuré pour absorber une puissance délivrée par l'au moins un panneau solaire vers la barre bus en courant continu ; et
un circuit de commande de démarrage (32), le circuit de commande de démarrage étant relié en parallèle entre les électrodes positive et négative de la barre bus en courant continu ; et
**caractérisé en ce que** le circuit d'absorption de puissance (31) est configuré pour interrompre l'absorption de la puissance délivrée par l'au moins un panneau solaire vers la barre bus en courant continu lorsqu'un point de puissance maximale MPP de l'au moins un panneau solaire est supérieur ou égal à une puissance de démarrage de l'alimentation électrique auxiliaire ; et
le circuit de commande de démarrage (32) est configuré pour démarrer l'alimentation électrique auxiliaire lorsque le circuit d'absorption de puissance est bloqué et le condensateur de la barre bus en courant continu est chargé à une première tension, la première tension correspondant à une tension de sortie de l'au moins un panneau solaire lorsque la puissance de sortie de l'au moins un panneau solaire est supérieure à la puissance de démarrage de l'alimentation électrique auxiliaire.

2. Circuit de démarrage selon la revendication 1, dans lequel le circuit d'absorption de puissance (31) comprend :
un circuit de décharge (51), le circuit de décharge étant relié en parallèle entre les électrodes positive et négative de la barre bus en courant continu, et le circuit de décharge étant configuré pour consommer une charge électrique générée par l'au moins un panneau solaire, de manière à absorber la puissance de sortie de l'au moins un panneau solaire ; et
un circuit de commande (52), le circuit de commande étant relié au circuit de décharge, et le circuit de commande étant configuré pour bloquer le circuit de décharge lorsqu'un courant de sortie de l'au moins un panneau solaire atteint un seuil de blocage, le seuil de blocage étant une valeur de courant du courant de sortie de l'au moins un panneau solaire lorsqu'un point de puissance maximale MPP de l'au moins un panneau solaire est supérieur ou égal à la puissance de démarrage de l'alimentation électrique auxiliaire.

3. Circuit de démarrage selon la revendication 2, dans lequel :
le circuit de décharge (51) comprend :
un dispositif de consommation de puissance (61), configuré pour : lorsque le circuit est débloqué, consommer la charge électrique générée par l'au moins un panneau solaire ; et
un premier dispositif commutateur (62), configuré pour bloquer le circuit de décharge sous la commande du circuit de commande, dans lequel,
une extrémité du dispositif de consommation de puissance (61) est reliée à l'électrode positive de la barre bus en courant continu, l'autre extrémité du dispositif de consommation de puissance est reliée à une première extrémité du premier dispositif commutateur, et une deuxième extrémité du premier dispositif commutateur est reliée à l'électrode négative de la barre bus en courant continu ; lorsqu'il est détecté que le courant de sortie de l'au moins un panneau solaire atteint le seuil de blocage, le circuit de commande bloque le premier dispositif commutateur, de sorte que le dispositif de consommation de puissance cesse de fonctionner.

4. Circuit de démarrage selon la revendication 3, dans lequel le premier dispositif commutateur (62) est configuré en outre pour débloquer le circuit de décharge sous la commande du circuit de commande, et le circuit de commande est configuré en outre pour : lorsque le courant de sortie de l'au moins un panneau solaire est supérieur à un seuil de déblocage, débloquer le premier dispositif commutateur, de façon à débloquer le circuit de décharge, le seuil de déblocage étant inférieur au seuil de blocage.

5. Circuit de démarrage selon la revendication 4, dans lequel :
le circuit de commande (52) comprend :
un premier diviseur de tension (71) et un deuxième diviseur de tension (72), configurés pour partager une tension entre les électrodes positive et négative de la barre bus en courant continu, une extrémité du premier diviseur de tension étant reliée à l'électrode positive de la barre bus en courant continu, l'autre extrémité du premier diviseur de tension étant reliée à une extrémité du deuxième diviseur de tension, et l'autre extrémité du deuxième diviseur de tension étant reliée à l'électrode négative de la barre bus en courant continu ;
un troisième diviseur de tension (73) et un quatrième diviseur de tension (74), configurés pour partager la tension entre les électrodes positive et négative de la barre bus en courant continu, une extrémité du troisième diviseur de tension étant reliée à l'électrode positive de la barre bus en courant continu, l'autre extrémité du troisième diviseur de tension étant reliée à une extrémité du quatrième diviseur de tension et l'autre extrémité du quatrième diviseur de tension étant reliée à l'électrode négative de la barre bus en courant continu ; et
un deuxième dispositif commutateur (75), configuré pour : lorsqu'une tension d'un premier point atteint un premier seuil, débloquer le premier dispositif commutateur, une première extrémité du deuxième dispositif commutateur, l'autre extrémité du premier diviseur de tension et une troisième extrémité du premier dispositif commutateur étant reliées au premier point, une deuxième extrémité du deuxième dispositif commutateur étant reliée à l'électrode négative de la barre bus en courant continu, une troisième extrémité du deuxième dispositif commutateur et l'autre extrémité du troisième diviseur de tension étant reliées à un deuxième point ; et,
lorsqu'une tension du deuxième point atteint un deuxième seuil, bloquer le premier dispositif commutateur, le premier seuil étant une valeur de tension du premier point lorsque le courant de sortie de l'au moins un panneau solaire correspond au seuil de déblocage et le deuxième seuil étant une valeur de tension du deuxième point lorsque le courant de sortie de l'au moins un panneau solaire correspond au seuil de blocage.

6. Circuit de démarrage selon la revendication 5, dans lequel :
le dispositif de consommation de puissance (61) est une résistance ; ou
le premier dispositif commutateur (62) est un transistor de commutation, et la première extrémité, la deuxième extrémité et la troisième extrémité du premier dispositif commutateur correspondent respectivement à un drain, une source et une grille du transistor de commutation ; ou
le deuxième dispositif commutateur (75) est un transistor de commutation, et la première extrémité, la deuxième extrémité et la troisième extrémité du deuxième dispositif commutateur correspondent respectivement à un drain, une source et une grille du transistor de commutation ; ou
le premier diviseur de tension (71) est une résistance ou une diode Zener ; ou
le deuxième diviseur de tension (72) est une résistance ou une diode Zener ; ou
le troisième diviseur de tension (73) est une résistance ou une diode Zener ; ou
le quatrième diviseur de tension (74) est une résistance ou une diode Zener.

7. Circuit de démarrage selon la revendication 6, dans lequel le transistor de commutation est un transistor quelconque parmi un transistor à effet de champ métal-oxyde-semiconducteur, MOSFET, un transistor bipolaire et un transistor bipolaire à grille isolée IGBT.

8. Circuit de démarrage selon l'une quelconque des revendications 1 à 7, dans lequel :
le circuit de commande de démarrage (32) comprend :
un cinquième diviseur de tension (81) et un sixième diviseur de tension (82), configurés pour partager la tension entre les électrodes positive et négative de la barre bus en courant continu, une extrémité du cinquième diviseur de tension étant reliée à l'électrode positive de la barre bus en courant continu, l'autre extrémité du cinquième diviseur de tension étant reliée à une extrémité du sixième diviseur de tension et l'autre extrémité du sixième diviseur de tension étant reliée à l'électrode négative de la barre bus en courant continu ; et
un dispositif de stockage d'énergie (83), configuré pour fournir une tension de démarrage à une puce de commande, une extrémité du dispositif de stockage d'énergie, l'autre extrémité du cinquième diviseur de tension et une extrémité de la puce de commande de l'alimentation électrique auxiliaire étant reliées à un point, et l'autre extrémité du dispositif de stockage d'énergie étant reliée à l'électrode négative de la barre bus en courant continu.

9. Circuit de démarrage selon la revendication 8, dans lequel le dispositif de stockage d'énergie (83) est un troisième condensateur, et, lorsque le circuit d'absorption de puissance est bloqué, des configurations paramétriques du cinquième diviseur de tension, du sixième diviseur de tension et du troisième condensateur permettent de charger le troisième condensateur à la tension de démarrage de la puce de commande après que le condensateur de la barre bus en courant continu a été chargé à la première tension.

10. Circuit de démarrage selon la revendication 9, dans lequel la puissance de sortie de l'au moins un panneau solaire à la première tension est une puissance correspondant au point de puissance maximale de l'au moins un panneau solaire dans une condition actuelle d'éclairage.

11. Circuit de démarrage selon l'une quelconque des revendications 8 à 10, dans lequel le cinquième diviseur de tension (81) est une résistance ou une diode Zener, et le sixième diviseur de tension (82) est une résistance ou une diode Zener.

12. Système d'alimentation électrique solaire, comprenant au moins un panneau solaire, un onduleur photovoltaïque et des charges montées à deux extrémités de l'onduleur photovoltaïque, l'onduleur photovoltaïque comprenant une alimentation électrique auxiliaire et le circuit de démarrage selon l'une quelconque des revendications 1 à 11.
